# EUROPEAN PATENT APPLICATION

(11) **EP 1 600 846 A1**
(43) Date of publication of application: **30.11.2005**
(21) Application number: 04716342.3
(22) Date of filing: 02.03.2004
(51) Int. Cl.: G06F 3/02, G06F 3/00

(54) **DATA INPUT DEVICE, DATA INPUT METHOD, DATA INPUT PROGRAM, AND COMPUTER-READABLE RECORDING MEDIUM CONTAINING DATA INPUT PROGRAM**

(30) Priority: 03.03.2003 JP 2003055515; 24.04.2003 JP 2003119994
(71) Applicant: MATSUSHITA ELECTRIC INDUSTRIAL CO., LTD., Kadoma-shi, Osaka 571-8501 (JP)
(72) Inventor: KANAZAWA, Kiyoshi, - (JP); HAYAMI, Takayuki, - (JP)
(74) Representative: TBK-Patent
(86) International application number: PCT/JP2004/002546
(87) International publication number: WO 2004/081778

(57) **Abstract**

It is an object of the present invention to desirably induce a user's gaze onto a keyboard or numeral buttons when data is directly inputted from the keyboard or the numeral buttons. In order to attain this object, a data input apparatus 10 according to the present invention includes: a first operating means 1 for directly inputting at least either of numerical data and character data; a second operating means 2 for executing an operation except a direct input of numerical data and character data; and an inducing means 5 for inducing a user's gaze onto the first operating means by having a blinking operation accompanied when a data input is started by the first operating means. When a data input is started by the first operating means 1, the inducing means 5 blinks on and off an induction mark 3c which expresses the shape of the first operating means 1 and the direction in which the first operating means 1 is located.

## Description

### Technical Field

The present invention relates to a data input apparatus which inputs numerical data or character data. It also relates to a data input method, a data input program and a computer-readable recording medium in which a data input program is recorded, for the same purpose.

### Background Art

Conventionally, information equipment such as a computer used to be basically operated through an input of a character and a numerical value by a keyboard or a ten-key. In recent years, however, a bit-map display and a window system have become widespread in a general-purpose personal computer. Along with this, a system in which a pointing device such as a so-called mouse is used together has become its mainstream. Thus, software has increased which allows a user to operate, using a mouse, most of necessary operations, such as the movement of a mouse cursor, the clicking of a mouse button and a drag-and-drop operation. Consequently, a user executes an input operation with a keyboard less frequently.

Even in special-purpose information equipment which does not naturally need a full keyboard, such as a mobile phone, the numeral buttons of 0 to 9 are operated when a numerical value such as a telephone number is inputted. On the other hand, if a retrieval function with no numerical input or the like is used, or if an operation is executed for an up-and-down and right-and-left move of a chosen item and the chosen item's determination which is displayed on a screen, then a dedicated button which is provided instead of a mouse is frequently used.

In such recent information equipment, a mouse, or a dedicated button which is used for the movement and determination of a chosen item, is separate from a keyboard or numeral buttons for directly inputting character data or numerical data. Therefore, when character data or numerical data necessary only in a specific case is directly inputted, taking a user interface into account, it is preferable that a user be induced to operate a keyboard or numeral buttons.

In contrast, in a user interface on a general-purpose personal computer, when numerical data or character data should be directly inputted, displaying an area and a text cursor for displaying an input result on a bit-map display is prevalent. As such a text cursor, a blinking cursor is often used.

In addition, when numeral buttons should be operated in a cellular phone, an art is proposed of lighting a light-emitting diode which is given to the numeral buttons. This prior art is disclosed, for example, in Japanese Patent Laid-Open No. 02-28817 specification (Patent Document 1). Besides, a similar art is also proposed of turning on the light of a numeral button, if necessary. This prior art is disclosed, for example, in Japanese Patent Laid-Open No. 2002-163063 specification (Patent Document 2).

However, these prior arts have a disadvantage in that the capability to lead a user's attention to a keyboard or numeral buttons is not necessarily adequate.

Specifically, if an area and a text cursor for displaying an input result are displayed on a bit-map display, a user's eyes can be induced onto the position of the text cursor. However, there is nothing to clarify the link of the text cursor and the keyboard, and thus, a user who is not familiar so much with the operation of information equipment cannot clearly understand what to do. If a blinking cursor is used as a text cursor, that is more effective in leading a user's attention to the text cursor. However, unless the link of the text cursor and the keyboard is expressed, a disadvantage cannot be resolved in that the user will not be obviously informed what to operate.

If the art of lighting a light-emitting diode which is given to numeral buttons is used as suggested in Patent Document 1 or Patent Document 2, a user's gaze can be induced onto the numeral buttons. This helps the user intuitively recognize that the numeral buttons should be operated. Nonetheless, the human visual sensation has the characteristic of easily noticing something changing, but tending to be unaware of something unchanged. Therefore, if something happens around a user to distract the user's attention temporarily, or in another such case, the user may not notice that the light-emitting diode has first been lit. In that case, it will be difficult to draw the attention afterward. Besides, in information equipment such as a mobile phone which works on a battery, there is another disadvantage in that if a light-emitting diode continues lighting up, that increases a power consumption, thus shortening its operable time.

### Disclosure of the Invention

In order to resolve the above described disadvantages, it is an object of the present invention to provide a data input apparatus, a data input method, a data input program and a computer-readable recording medium in which a data input program is recorded, which are capable of desirably inducing a user's gaze onto a keyboard or numeral buttons when data is directly inputted from the keyboard or the numeral buttons.

The data input apparatus according to a first aspect of the present invention, including: a first operating means for directly inputting at least either of numerical data and character data; a second operating means for executing an operation except a direct input of numerical data and character data; and an inducing means for inducing a user's gaze onto the first operating means by having a blinking operation accompanied when a data input is started by the first operating means. According to this configuration, using a blinking operation which gives a change to a user's eyesight, the user's gaze can be effectively induced onto the first operating means. In addition, when something happens around the user to distract the user's attention temporarily, or at another such time, even if the user may not notice that a blinking operation has started, the blinking operation continues to give a change to the user's eyesight. This makes it easy for the user to pay attention later, thereby helping lead the user to operate the first operating means.

According to a second aspect of the present invention, in the data input apparatus according to the first aspect, the inducing means blinks on and off an induction mark for inducing a user's gaze onto the first operating means when a data input is started by the first operating means. According to this configuration, the inducing means blinks the induction mark on and off, thereby effectively leading a user's eyes onto the first operating means.

According to a third aspect of the present invention, in the data input apparatus according to the second aspect: the data input apparatus further includes a displaying means for displaying data which is inputted by the first operating means, and a cursor displaying means for displaying a blinking cursor in the displaying means; and the inducing means synchronizes a blink of the blinking cursor and a blink of the induction mark by the inducing means. According to this configuration, the induction mark which is blinked on and off by the inducing means is related to the blinking cursor. This helps a user intuitively recognize that an input operation should be executed using the first operating means.

According to a fourth aspect of the present invention, in the data input apparatus according to the third aspect, the induction mark is disposed so that the distance between the induction mark which is blinked on and off by the inducing means and the first operating means is shorter than the distance between the blinking cursor and the first operating means. Therefore, a user's gaze can be induced onto the first operating means, better than in the case where it is disposed with the opposite positional relation.

According to a fifth aspect of the present invention, in the data input apparatus according to the third aspect, the inducing means blinks on and off, in the displaying means, an induction mark for inducing a user's gaze onto the first operating means. Hence, in the displaying means which is carefully watched from the first by the user, the induction mark for inducing the user's gaze onto the first operating means is displayed and blinked on and off. This helps effectively lead a user's eyes onto the first operating means.

According to a sixth aspect of the present invention, in the data input apparatus according to the fifth aspect, the induction mark which is blinked on and off by the inducing means is disposed closer to the first operating means than the middle of the displaying means. According to this configuration, a user's gaze can be induced onto the first operating means, better than in the case where it is disposed with the reverse positional relation.

According to a seventh aspect of the present invention, in the data input apparatus according to the fifth aspect, the induction mark for inducing a user's gaze onto the first operating means includes a figure which represents the shape of the first operating means. Therefore, a user can become intuitively aware where the first operating means is located in the data input apparatus.

According to an eighth aspect of the present invention, in the data input apparatus according to the fifth aspect, the induction mark for inducing a user's gaze onto the first operating means includes a figure which represents the direction where the first operating means is located. Therefore, a user can become intuitively aware of the direction in which the first operating means is located.

According to a ninth aspect of the present invention, in the data input apparatus according to the second aspect, the inducing means stops blinking on and off an induction mark for inducing a user's gaze onto the first operating means when an operation of the first operating means is started. Therefore, for a user who has recognized that the first operating means should be operated, it can be prevented the following: the induction mark keeps drawing the user's gaze and thus the user's attention is distracted from a primary operation in which the user inputs a numerical value or a character.

According to a tenth aspect of the present invention, in the data input apparatus according to the second aspect, the inducing means stops blinking on and off the induction mark when the first character of at least either of numerical data and character data is displayed by the displaying means. Therefore, for a user who has recognized that the first operating means should be operated, it can be prevented the following: the induction mark keeps drawing the user's gaze and thus the user's attention is distracted from a primary operation in which the user inputs a numerical value or a character.

According to an eleventh aspect of the present invention, in the data input apparatus according to the ninth or tenth aspect, the light of the induction mark is turned on after the induction mark is stopped blinking on and off. According to this configuration, it can be clarified that the first operating means should continue being operated sequentially even after the induction mark is stopped blinking on and off.

According to a twelfth aspect of the present invention, in the data input apparatus according to the second aspect, the inducing means turns off the light of the induction mark for inducing a user's gaze onto the first operating means when an operation of the first operating means is completed. According to this configuration, a user can be prevented from having a misunderstanding about the operation of the first operating means, for example, from operating it when unnecessary.

According to a thirteenth aspect of the present invention, in the data input apparatus according to the third aspect, the inducing means displays the induction mark synchronously when the blinking cursor is displayed and does not display the induction mark synchronously when the blinking cursor is not displayed. According to this configuration, the induction mark which is blinked on and off by the inducing means is related in a natural form to the blinking cursor. This helps a user intuitively recognize that an input operation should be executed using the first operating means.

According to a fourteenth aspect of the present invention, in the data input apparatus according to the third aspect, the inducing means does not display the induction mark synchronously when the blinking cursor is displayed and displays the induction mark synchronously when the blinking cursor is not displayed. According to this configuration, a visual impression at the time when the blinking cursor is displayed and a visual impression at the time when it is not displayed do not coincide with a visual impression at the time when the induction mark is displayed and a visual impression at the time when it is not displayed, respectively. Conversely, even when they are displayed in a color scheme close to a visual impression at the time when the induction mark is not displayed and a visual impression at the time when the induction mark is displayed, the induction mark which is blinked on and off by the inducing means is related in a natural form to the blinking cursor. This helps a user intuitively recognize that an input operation should be executed using the first operating means.

According to a fifteenth aspect of the present invention, in the data input apparatus according to the second aspect, the inducing means includes an induction lamp near the first operating means and blinks on and off the induction lamp as an induction mark for inducing a user's gaze onto the first operating means. According to this configuration, even in an environment where it is not light so much, by blinking the induction lamp on and off, a user's gaze can be effectively induced onto the first operating means.

According to a sixteenth aspect of the present invention, in the data input apparatus according to the fifteenth aspect, the induction lamp illuminates the operation surface of the first operating means when the induction lamp is lit. According to this configuration, a user's eyes can be directly induced onto the first operating means.

According to a seventeenth aspect of the present invention, in the data input apparatus according to the fifteenth aspect, the inducing means blinks on and off the induction lamp by allowing electric power which is supplied to the induction lamp to be intermittent. According to this configuration, a power consumption necessary for lighting the induction lamp becomes less than that in the case where the induction lamp is kept lighted. Especially, in information equipment which works on a battery, its operable time can be extended without charging or replacing the battery.

The data input program according to an eighteenth aspect of the present invention, allowing a computer to function as: a first operating means for directly inputting at least either of numerical data and character data; a second operating means for executing an operation except a direct input of numerical data and character data; and an inducing means for inducing a user's gaze onto the first operating means by having a blinking operation accompanied when a data input is started by the first operating means. Therefore, using a blinking operation which gives a change to a user's eyesight, the user's gaze can be effectively induced onto the first operating means. In addition, when something happens around the user to distract the user's attention temporarily, or at another such time, even if the user may not notice that a blinking operation has started, the blinking operation continues to give a change to the user's eyesight. This makes it easy for the user to pay attention later, thereby helping lead the user to operate the first operating means. Accordingly, when a character or a numerical value needs to be directly inputted, software can be realized which allows a user's eyes to be suitably led onto the first operating means. This software allows hardware resources which are configured as a general-purpose information processing apparatus to collaborate. Thereby, at least one part of the data input apparatus according to the present invention can be easily realized. Besides, it is distributed via a recording medium or a communication circuit, so that a new function can be added or a function can be updated easily.

The computer-readable recording medium in which a data input program is recorded according to a nineteenth aspect of the present invention, the data input program allows a computer to function as: a first operating means for directly inputting at least either of numerical data and character data; a second operating means for executing an operation except a direct input of numerical data and character data; and an inducing means for inducing a user's gaze onto the first operating means by having a blinking operation accompanied when a data input is started by the first operating means. Therefore, using a blinking operation which gives a change to a user's eyesight, the user's gaze can be effectively induced onto the first operating means. In addition, when something happens around the user to distract the user's attention temporarily, or at another such time, even if the user may not notice that a blinking operation has started, the blinking operation continues to give a change to the user's eyesight. This makes it easy for the user to pay attention later, thereby helping lead the user to operate the first operating means. The data input program which has these advantages is properly recorded and distributed.

The data input method according to a twentieth aspect of the present invention, including: an inducing step of an inducing means inducing a user's gaze onto a first operating means for directly inputting at least either of numerical data and character data by having a blinking operation accompanied when a data input is started by the first operating means; and a first operating step of the first operating means directly inputting at least either of numerical data and character data. Therefore, using a blinking operation which gives a change to a user's eyesight, the user's gaze can be effectively induced onto the first operating means. In addition, when something happens around the user to distract the user's attention temporarily, or at another such time, even if the user may not notice that a blinking operation has started, the blinking operation continues to give a change to the user's eyesight. This makes it easy for the user to pay attention later, thereby helping lead the user to operate the first operating means.

The objects, characteristics, aspects and advantages of the present invention will be more obvious in the following detailed description and attached drawings.

### Brief Description of the Drawings

Fig. 1 is a block diagram, showing the configuration of a data input apparatus according to a first embodiment of the present invention.
Fig. 2 is a flow chart, showing a data input processing of the data input apparatus shown in Fig. 1.
Fig. 3 is a flow chart, showing a timer interruption processing.
Fig. 4A is a first representation, showing the contents of an image which is displayed in a displaying means. Fig. 4B is a second representation, showing the contents of an image which is displayed in the displaying means.
Fig. 5A is a first representation, showing the contents of an image which is displayed in the displaying means. Fig. 5B is a second representation, showing the contents of an image which is displayed in the displaying means. Fig. 5C is a third representation, showing the contents of an image which is displayed in the displaying means. Fig. 5D is a fourth representation, showing the contents of an image which is displayed in the displaying means. Fig. 5E is a fifth representation, showing the contents of an image which is displayed in the displaying means.
Fig. 6A is a first representation, showing the contents of an image which is displayed in a displaying means according to a second embodiment of the present invention. Fig. 6B is a second representation, showing the contents of an image which is displayed in the displaying means.
Fig. 7 is a block diagram, showing the configuration of a data input apparatus according to a third embodiment of the present invention.

### Best Mode for Implementing the Invention

Hereinafter, desirable embodiments of the present invention will be described with reference to the drawings. Herein, the present invention is not limited to these embodiments.

### (First Embodiment)

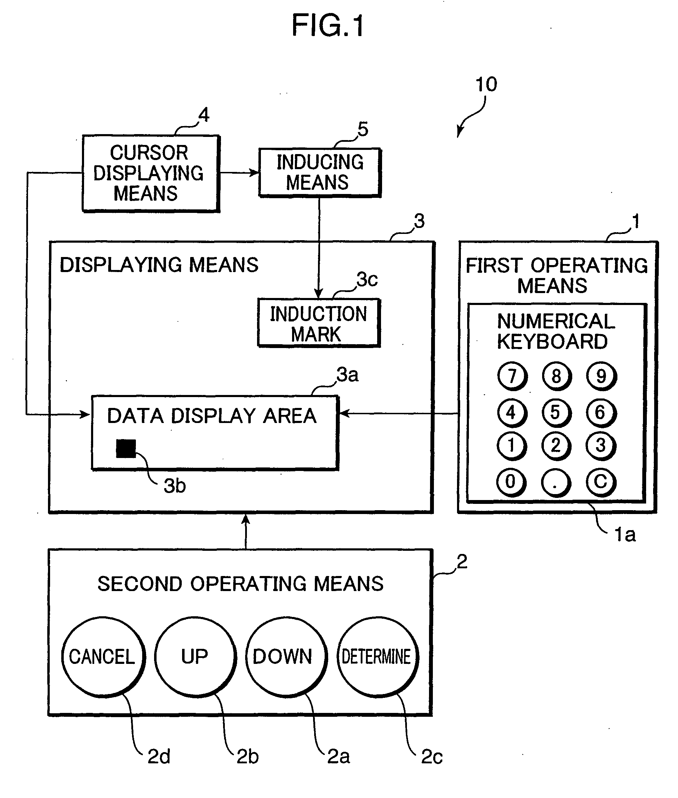

Fig. 1 is a block diagram, showing the configuration of a data input apparatus according to a first embodiment of the present invention.

In Fig. 1, a data input apparatus 10 includes: a first operating means 1; a second operating means 2; a displaying means 3; a cursor displaying means 4; and an inducing means 5. The first operating means 1 which inputs numerical data directly includes a numerical keyboard 1a which is made up of: ten numeral buttons "0" to "9" for inputting a numerical value; a decimal-point button "." for inputting a decimal point; and a clearing button "C" for deleting an inputted numerical value. The second operating means 2 which executes an operation except a direct input of a numerical value includes: a "Down" button 2a and a "Up" button 2b which move an item to be chosen; a "Determine" button 2c which determines an item to be chosen; and a "Cancel" button 2d which cancels a determined operation. The displaying means 3 is realized, for example, by a liquid-crystal display. It displays numerical data which is inputted by the first operating means 1, or makes another display. A part of the screen of the displaying means 3 is used as a data display area 3a for displaying numerical data which is inputted by the first operating means 1. In the data display area 3a, a text cursor 3b is displayed, if necessary. Another part of the screen of the displaying means 3 is used to display an induction mark 3c for inducing a user's gaze onto the first operating means 1. The first operating means 1 is disposed on the right side of the displaying means 3. The induction mark 3c is displayed on the right-hand side from the middle of the screen of the displaying means 3, and near the first operating means 1 on the right-hand side from the text cursor 3b. The second operating means 2 is disposed below the displaying means 3. The cursor displaying means 4 displays the text cursor 3b in the data display area 3a when numerical data is inputted from the first operating means 1. The inducing means 5 blinks the induction mark 3c on and off in a part of the display area of the displaying means 3. Thereby, a user's gaze is led onto the first operating means 1.

Herein, the data input apparatus 10 may also be configured, in terms of hardware, as a general-purpose information processing apparatus which includes: a central processing unit (or a so-called CPU); a non-volatile memory or a storage unit in which a program or permanent data is recorded; a fast-accessible volatile memory which stores temporary data; and an input-and-output unit. In that case, a data input program which allows those hardware resources to collaborate is stored in advance in the non-volatile memory or the storage unit, so that it can be realized in the form of software. In this case, it may also be provided beforehand with the function of distributing a data input program via a recording medium such as a magnetic disk and an optical disk or a communication circuit such as the Internet and writing it in a non-volatile memory or a storage unit. Thereby, a new function can be added and a function can be updated.

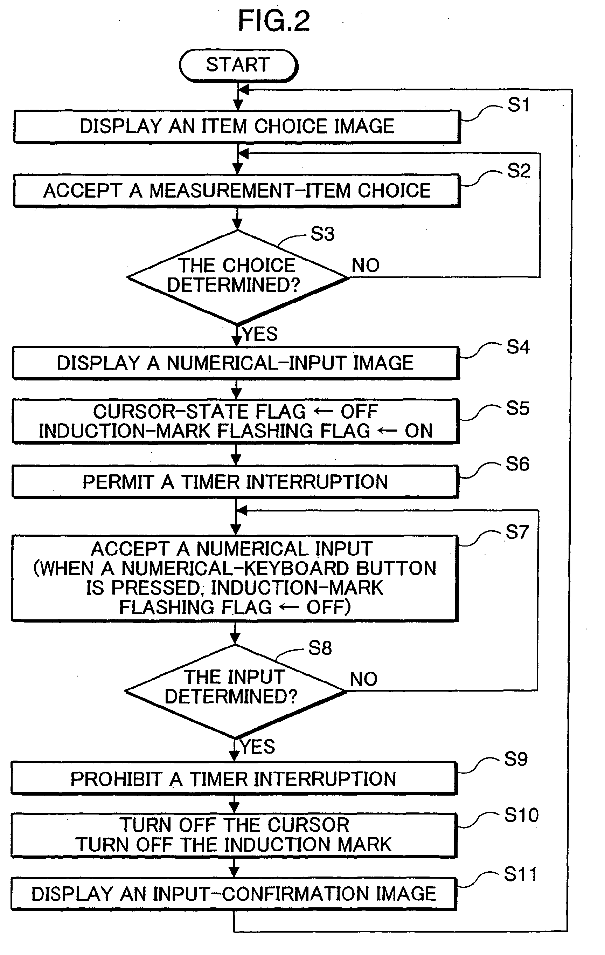

Next, an operation will be described of the data input apparatus 10 according to the first embodiment. Fig. 2 is a flow chart, showing a data input processing of the data input apparatus 10 shown in Fig. 1. Herein, in the following description, an example is given in which body information, such as body temperature, body weight, blood pressure and a blood-sugar value, is inputted using the data input apparatus 10.

In a step S1, the displaying means 3 displays, as an item choice image, a plurality of items among which a user is to make a choice using the second operating means 2. In the item choice image, measurement items are displayed for inputting body information such as body temperature, body weight, blood pressure and a blood-sugar value.

In a step S2, the second operating means 2 accepts the choice of a measurement item by the user. The user chooses a measurement item in which the user inputs data, using the "Down" button 2a, the "Up" button 2b, the "Determine" button 2c and the "cancel" button 2d.

In a step S3, the second operating means 2 decides whether or not the "Determine" button 2c has been pressed. Herein, if the "Determine" button 2c has been pressed (YES at the step S3), the processing goes to a step S4. Unless the "Determine" button 2c has been pressed (NO at the step S3), the processing returns to the step S2. Then, the choice of a measurement item by the user is accepted.

If the "Determine" button 2c has been pressed down, in the step S4, the displaying means 3 displays a numerical-value input image where the user executes an input using the numerical keyboard 1a. In the numerical-value input image, the data display area 3a is displayed for displaying numerical data which is inputted by the user.

In a step S5, the cursor displaying means 4 turns off a cursor-state flag, and the inducing means 5 turns on an induction-mark blinking flag. Herein, when the cursor-state flag is turned on, the light of the text cursor 3b is turned on. On the other hand, when it is turned off, the light of the text cursor 3b is turned off. Besides, the induction-mark blinking flag is a flag for blinking the induction mark 3c on and off when it is turned on and turning on the light of the induction mark 3c when it is turned off.

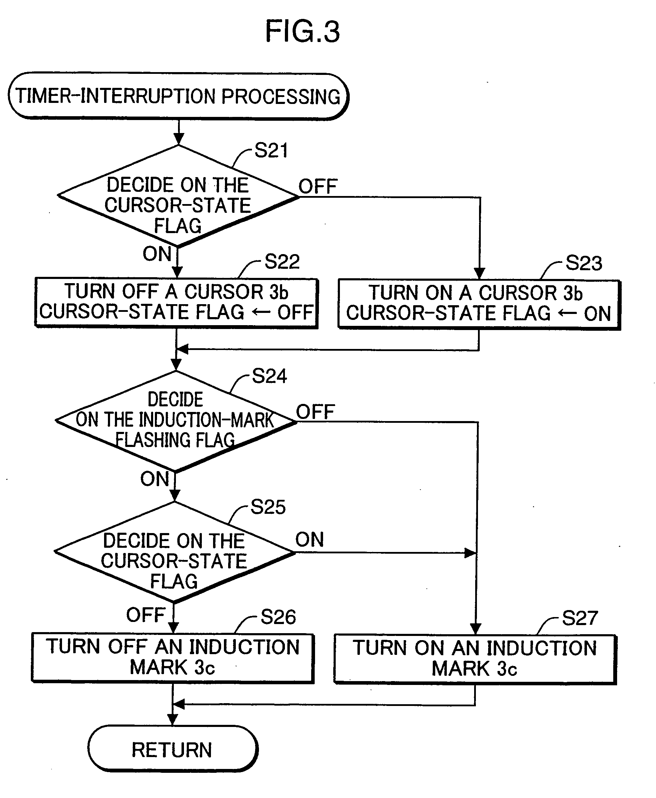

In a step S6, the inducing means 5 permits a timer interruption processing. If the timer interruption processing has been permitted, the processing of a timer interruption is executed at intervals of 0.5 seconds. Herein, the timer interruption processing will be described using Fig. 3.

Fig. 3 is a flow chart, showing the timer interruption processing. In a step S21 of Fig. 3, the cursor displaying means 4 decides whether the cursor-state flag is turned on or off. Herein, if the cursor-state flag is turned on (ON at the step S21), the processing moves to a step S22. If the cursor-state flag is turned off (OFF at the step S21), it shifts to a step S23.

If the cursor-state flag is turned on, in the step S22, the cursor displaying means 4 turns off the light of the text cursor 3b and turns off the cursor-state flag.

On the other hand, if the cursor-state flag is turned off, in the step S23, the cursor displaying means 4 turns on the light of the text cursor 3b and turns on the cursor-state flag.

In a step S24, the inducing means 5 decides whether the induction-mark blinking flag is turned on or off. Herein, if the induction-mark blinking flag is turned on (ON at the step S24), the processing moves to a step S25. If the induction-mark blinking flag is turned off (OFF at the step S24), it shifts to a step S27.

If the induction-mark blinking flag is turned on, in the step S25, the inducing means 5 decides whether the cursor-state flag is turned on or off. Herein, if the cursor-state flag is turned on (ON at the step S25), the processing moves to a step S27. If the cursor-state flag is turned off (OFF at the step S25), it shifts to a step S26.

If the induction-mark blinking flag is turned on and the cursor-state flag is turned off, in the step S26, the inducing means 5 turns off the light of the induction mark 3c. On the other hand, if the induction-mark blinking flag is turned off, or if the cursor-state flag is turned on, in the step S27, the inducing means 5 turns on the light of the induction mark 3c.

The timer interruption processing of Fig. 3 is executed within several milliseconds. Hence, it looks to a person's eyes as if the processing of the steps S22 , S23 and the processing of the steps S26 , S27 , or the cursor's off, on and the induction mark's off, on, were simultaneously executed.

The above described timer interruption processing is executed, for example, at intervals of 0.5 seconds. Thereby, the text cursor 3b and the induction mark 3c are flashed on and off synchronously at 0.5-second intervals.

Returning to Fig. 2, in a step S7, the first operating means 1 accepts the input of numerical data by the user. The user inputs the numerical data, using the numerical keyboard 1a in the first operating means 1. Then, the displaying means 3 displays, in the data display area 3a, the numerical value which corresponds to the numerical data that has been inputted in the first operating means 1. Herein, when any of the keys in the numerical keyboard 1a is pressed, the inducing means 5 turns off the induction-mark blinking flag.

In a step S8, the second operating means 2 decides whether or not the "Determine" button 2c has been pressed. Herein, if the "Determine" button 2c has been pressed (YES at the step S8), the processing goes to a step S9. Unless the "Determine" button 2c has been pressed (NO at the step S8), the processing returns to the step S7. Then, the input of a numerical value by the user is again accepted.

If the "Determine" button 2c has been pressed down, in the step S9, the inducing means 5 prohibits the timer interruption processing. Then, in a step S10, the cursor displaying means 4 turns off the light of the text cursor 3b and the inducing means 5 turns off the light of the induction mark 3c.

In a step S11, the displaying means 3 displays an input confirmation image for giving the user the numerical data whose input has been completed. After the input confirmation image has been displayed, the processing returns to the step S1. Then, the displaying means 3 displays the item choice image again.

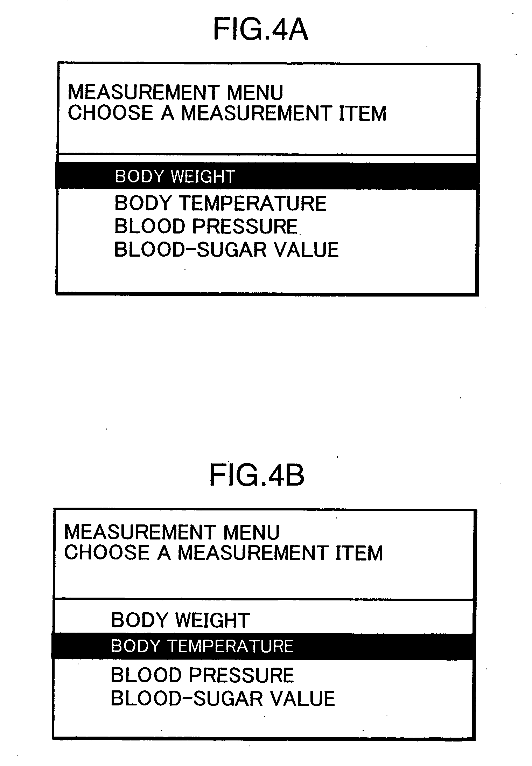

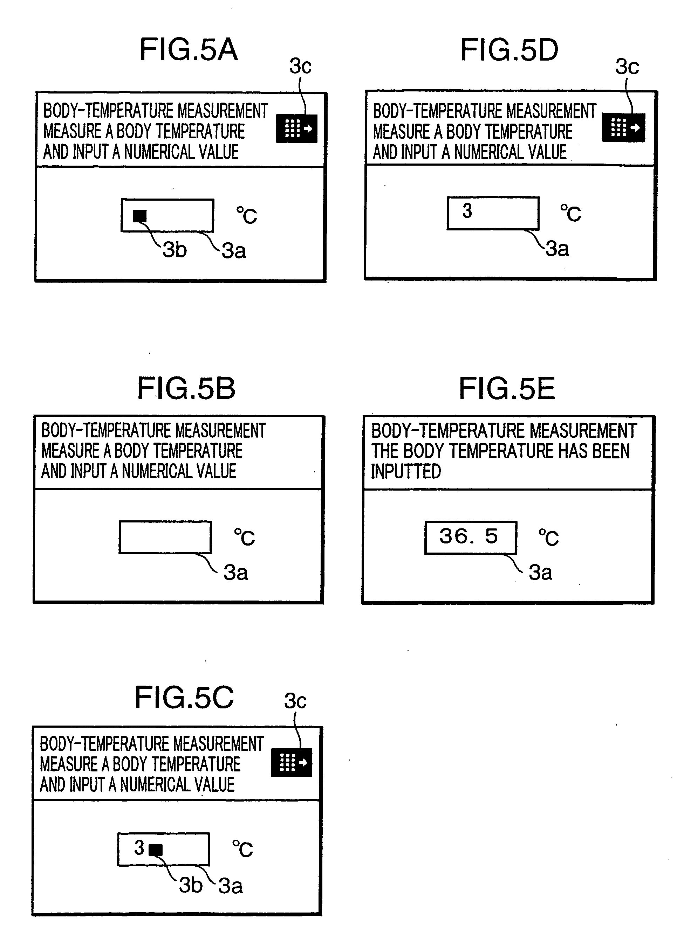

Fig. 4A and Fig. 4B are each a representation, showing an image example which is displayed in the displaying means 3 when the data input apparatus is operated using the second operating means 2. Fig. 5A to Fig. 5E are each a representation, showing an image example which is displayed in the displaying means 3 when numerical data is directly inputted in the data input apparatus 10, using the first operating means 1.

First, an operation will be described in the case where something except inputting a numerical value directly is executed using the second operating means 2. Herein, in the following description, an example is given in which the data input apparatus 10 is applied to an apparatus that inputs and manages body information such as body temperature, body weight and blood pressure. Fig. 4A is a representation, showing an example of the image (i.e., the item choice image) which is displayed in the displaying means 3 when body information is inputted.

In Fig. 4A, in the uppermost part of the displaying means 3, the character string of a "Measurement Menu" is displayed as the title of this image. In the next line, the contents of an operation which a user should execute in this image are displayed like "Choose a measurement item." In the following four lines, as measurement items among which a user can make a choice, the four items of "body weight", "body temperature", "blood pressure" and a "blood-sugar value" are displayed in this order from above. Among these four items, only the item which is chosen as the measurement item is displayed using white characters on a black ground. The remaining three items are displayed using black characters on a white ground. In short, only the chosen item is reversed between black and white. In the initial state, the leading item "body weight" is chosen and turned over.

Returning to Fig. 1, the user makes a choice from among the above described four items, using the second operating means 2. If the user presses the "Down" button 2a, an item to be reversely displayed moves to the item right below. For example, as shown in Fig. 4A, if the "Down" button 2a is pressed in a state where the "body weight" is chosen and turned over, as shown in Fig. 4B, the reversal display of the "body weight" is removed, so that it is displayed with black characters on a white ground. Then, the item "body temperature" just under the "body weight" is turned over and is displayed with white characters on a black ground. In the same way, if the user again presses the "Down" button 2a in a state where the image of Fig. 4B is displayed in the displaying means 3, the reversal display of the "body temperature" is lifted, and then, the "blood pressure" is reversely displayed. Sequentially, if the user presses the "Down" button 2a, the reversal display of the "blood pressure" is removed, and then, the "blood-sugar value" is turned over and displayed. In a state where the "blood-sugar value" at the bottom is chosen and turned over, even if the "Down" button 2a is further pressed, the contents which are displayed in the displaying means 3 remain unchanged.

If the user presses the "Up" button 2b, an item to be reversely displayed moves to the item right above. For example, as shown in Fig. 4B, if the "Up" button 2b is pressed in a state where the "body temperature" is chosen and turned over, as shown in Fig. 4A, the reversal display of the "body temperature" is removed, so that it is displayed with black characters on a white ground. Then, the item "body weight" just over the "body temperature" is turned over and is displayed with white characters on a black ground. Similarly, if the user presses the "Up" button 2b in a state where the "blood-sugar value" in the lowermost part is turned over, the reversal display of the "blood-sugar value" is lifted, and then, the item "blood pressure" just above is reversely displayed. In this state, if the user further presses the "Up" button 2b, as shown in Fig. 4B, the reversal display of the "blood pressure" is removed, and then, the item "body temperature" right above is reversely displayed. In the state of Fig. 4A where the top item "body weight" is chosen and turned over, even if the "Up" button 2b is further pressed down, the contents which are displayed in the displaying means 3 remain unchanged.

Herein, the displaying means 3 may also reverse the top "body weight" when the "Down" button 2a is pushed in a state where the bottom "blood-sugar value" is turned over. In the same way, the displaying means 3 may also reverse the bottom "blood-sugar value" when the "Up" button 2b is pushed down in a state where the top "body weight" is turned over.

If the "Determine" button 2c is pressed, the display contents in the displaying means 3 is chosen. Then, the screen image is shifted to a measurement/input image for the reversely-displayed item.

For example, in the state of Fig. 4B where the "body temperature" is chosen, if the "Determine" button 2c is pressed down, the displaying means 3 changes the screen's display contents into those of Fig. 5A. That prompts an input of body-temperature data. The contents of Fig. 5A will be described in detail later.

In the displaying means 3, the image of Fig. 5A is displayed which prompts an input of body-temperature data. In this state, if the user pushes the "Cancel" button 2d, the image which is displayed in the displaying means 3 returns to that of Fig. 4B.

Hence, the operation of a user choosing and determining an item which is displayed in the displaying means 3, and the operation of canceling the determination, can be executed simply by the second operating means 2, without using the first operating means 1.

As the percentage of the operation which can be executed if only a user uses the second operating means 2 becomes higher, the user takes it for granted that the user operates this data input apparatus 10, using only the second operating means 2. This causes the user to feel lost when being requested to execute the other operations.

Next, the operation of inputting a numerical value directly will be described, using an example in which a user inputs a measured body-temperature value in the data input apparatus 10.

The direct input of a numerical value is executed using the first operating means 1. For example, when the direct input of a body temperature starts, the displaying means 3 displays a screen image (i.e., a numerical-value input image) shown in Fig. 5A and Fig. 5B.

In Fig. 5A, in the uppermost part of the displaying means 3, the character string of "Body-temperature Measurement" as the title of this image is displayed from the left end. Under this, In the next line, the contents of an operation which a user should execute in this image are displayed over two lines, like "Measure a body temperature and input a numerical value".

In the middle in the right-and-left directions of the lower half of the screen, there is the data display area 3a which is an area for displaying an inputted body-temperature value. In its leftmost part, the text cursor 3b is displayed and periodically blinked on and off. For example, its light is kept turned on for 0.5 seconds and off for 0.5 seconds so that it can be blinked at intervals of one second. The blinking of the text cursor 3b is controlled by the cursor displaying means 4 of Fig. 1. Fig. 5A shows a state where the light of the text cursor 3b is turned on. On the right-hand side right from the data display area 3a, the character of "°C" is displayed as the unit of body temperature. At the right end of the upper half of the screen, the induction mark 3c is displayed for inducing a user's gaze onto the numerical keyboard 1a. The light of the induction mark 3c is turned on, simultaneously when the light of the text cursor 3b is turned on. The light of the induction mark 3c is turned off simultaneously when the light of the text cursor 3b is turned off. The light of the induction mark 3c includes spots which indicate the twelve buttons on the numerical keyboard 1a, and a rightward arrow which indicates the direction in which the numerical keyboard 1a is located. The blinking of the induction mark 3c is controlled by the inducing means 5 of Fig. 1. The screen image of Fig. 5A shows a state where the light of the induction mark 3c is turned on.

Fig. 5B is a representation, showing the contents which are displayed in the displaying means 3 when the lights of the text cursor 3b and the induction mark 3c are turned off. When the input of a body temperature starts, the screen image of Fig. 5A and the screen image of Fig. 5B are displayed so that they are alternately switched at 0.5-second intervals.

Herein, image data which is displayed as the induction mark 3c, numerical data which designates its blinking cycle, or the like, is stored in a non-volatile memory which is beforehand provided in the data input apparatus 10. The inducing means 5 reads such data and displays it in the displaying means 3.

A user operates the numerical keyboard 1a in the first operating means 1. If the user inputs one digit of the value of body-temperature data, the character which expresses the numerical value is displayed in the place where the text cursor 3b has been displayed within the data display area 3a. For example, in order to input 36.5 as a body-temperature value, if the user presses its initial numeral button "3", then as shown in Fig. 5C, the displaying means 3 displays the figure of "3" at the left end of the data display area 3a. The cursor displaying means 4 moves the position in which the text cursor 3b is blinked on and off, rightward by the space of one character. On the other hand, the inducing means 5 stops blinking the induction mark 3c and keeps the light of the induction mark 3c turned on.

Therefore, in the displaying means 3, the screen image of Fig. 5C in which both of the text cursor 3b and the induction mark 3c are displayed, and the screen image of Fig. 5D in which the text cursor 3b is not displayed and the induction mark 3c is displayed, are displayed so that they are alternately switched at 0.5-second intervals.

Thereafter, in order for the user to input 36.5 as a body-temperature value, as the user presses each button of "6", "." and "5" of the numerical keyboard 1a, the character string which expresses input data within the data display area 3a changes successively from "36" through "36." to "36.5". Along with such changes, the cursor displaying means 4 also moves the position in which the text cursor 3b is displayed, rightward one after another by the space of one character. At this time, the inducing means 5 is keeping the light of the induction mark 3c turned on. If the user has pressed, by mistake, a wrong button of the numerical keyboard 1a while inputting, the user can clear a digit of the last-inputted number by pushing the "C" button on the numerical keyboard 1a.

In this way, if the numerical value "36.5" which represents a body temperature has been inputted, the user presses the "Determine" button 2c of the second operating means 2 to declare that the input is completed. At this time, as shown in Fig. 5E, the displaying means 3 erases the display of "Measure a body temperature and input a numerical value". Instead, it displays "The body temperature has been inputted", so that the user can confirm the inputted numerical data. Besides, the cursor displaying means 4 erases the text cursor 3b, and the inducing means 5 erases the induction mark 3c. After the displaying means 3 has displayed the screen image of Fig. 5E for five seconds, it returns the display contents to the screen image of Fig. 4B.

In such a way as described above, the direct input of numerical data is completed.

Hence, according to this embodiment, when the direct input of data is started using the first operating means 1, a blinking operation takes place so that a user's eyes can be led onto the first operating means 1. This allows the user to become clearly aware that the first operating means 1 should be operated, different from the prior arts in which a text cursor is simply displayed.

Furthermore, a user's gaze is induced, using a blinking operation in which a visual change continues. Therefore, even if the user has first failed to notice, the subsequent operation attracts the user's attention easily. This leads the user to operate the first operating means 1.

Moreover, when the direct input of numerical data should be started using the first operating means 1, the inducing means 5 blinks the induction mark 3c on and off in the displaying means 3. Thereby, at first, a user's attention can be drawn. Besides, the induction mark 3c includes a rightward arrow, and thus, the user can recognize that the first operating means 1 sits in the right direction from the displaying means 3. In addition, it also includes a figure which expresses the shape of the button group of the numerical keyboard 1a in the first operating means 1. Therefore, the user can become intuitively aware where the first operating means is located in the data input apparatus. This can suitably induce a user's gaze onto the first operating means 1.

Furthermore, until a user operates the first operating means 1, the inducing means 5 continues blinking the induction mark 3c on and off in the displaying means 3. Therefore, even if the user has inattentively failed to notice when the light of the induction mark 3c is first turned on, the user's gaze can be led onto the first operating means 1 when the user watches the screen image.

Moreover, the induction mark 3c is displayed synchronously when the text cursor 3b is displayed, and the induction mark 3c is not displayed synchronously when the text cursor 3b is not displayed. Therefore, the data display area 3a in which an inputted numerical value can be related to the induction mark 3c. This helps a user intuitively recognize that the numerical value can be directly inputted by operating the first operating means 1 onto which the user's gaze is induced through the blinking of the induction mark 3c.

In addition, the induction mark 3c is blinked on and off on the display screen which a user watches carefully from the beginning. This can effectively induce the user's gaze onto the first operating means 1.

Furthermore, the induction mark 3c is displayed in a position closer to the first operating means 1 than the middle of the screen of the displaying means 3. Therefore, through the blinking of the induction mark 3c, a user's gaze can be effectively induced onto the first operating means 1.

Moreover, the induction mark 3c is disposed in a position closer to the first operating means 1 than the text cursor 3b. Therefore, through the blinking of the induction mark 3c, a user's gaze can be induced onto the first operating means 1, better than in the case where it is disposed with the opposite positional relation.

In addition, when a user has become aware that the first operating means 1 should be operated and has inputted the first place of numerical data from the first operating means 1, the inducing means 5 stops blinking the induction mark 3c. Thereafter, its light is kept turned on during a period of time when the operation of the first operating means 1 should be continued. Therefore, for a user who has recognized that the first operating means 1 should be operated, it can be prevented the following: the induction mark 3c keeps drawing the user's gaze and thus the user's attention is distracted from a primary operation in which the user inputs a numerical value or a character. Herein, in this embodiment, an example is described in which the "3" button is first pressed when a user operates the numerical keyboard 1a and inputs the value of a body temperature. However, if the user first pushes a button improper for the first numeral of a numerical value such as the "C" button and the " . " button, the button-pressing operation may also be designed to be ignored. In that case, only when a numeral button is first pressed down, the induction mark 3c is stopped blinking and kept turned on. Or, a user may also be considered to have already recognized that the first operating means 1 should be operated, even though the user has pressed a wrong button. In that case, when the "C" button or the "." Button has been pressed, the induction mark 3c is stopped blinking and kept turned on.

Furthermore, when the direct input of numerical data is complete using the first operating means 1, the light of the induction mark 3c is turned off. Therefore, a user can be prevented from having a misunderstanding about the operation of the first operating means 1, for example, from operating it when unnecessary.

Herein, in this embodiment, an example is described in which the induction mark 3c includes both of a figure which expresses the shape of the button group of the numerical keyboard 1a in the first operating means 1 and an arrow which indicates the direction in which the first operating means 1 is located. However, only either of them may also be displayed.

Moreover, if a character except a numerical value also needs to be directly inputted, the first operating means 1 may also naturally be configured by replacing the numerical keyboard 1a with a full keyboard, or doing another such. In that case, needless to say, the induction mark 3c should be changed so as to precisely express the shape of a full keyboard. There is a case where a full keyboard is disposed below the displaying means 3, as is the case with a general-purpose computer. In such a case, the induction mark 3c can be displayed, not a little rightward from the middle of the screen of the displaying means 3, but slightly below it. Then, the arrow of the induction mark 3c may also be downward. This gives the same advantage as that according to this embodiment.

In addition, in this embodiment, an example is described in which the second operating means 2 is configured by the "Down" button 2a to the "Cancel" button 2d. However, it may also be configured by a pointing device such as a touch panel and a mouse.

Furthermore, in this embodiment, the first operating means 1 is disposed on the right side of a displaying means. However, the first operating means 1 may also be disposed, for example, on the left-hand side of the displaying means 3. Especially, in the case where a user is left-handed, if the first operating means 1 is placed on the left side of the displaying means 3, that makes it easier for the user to execute an input operation. In that case, the induction mark 3c is displayed a little leftward from the middle of the screen of the displaying means 3, and near the first operating means 1 on the left side of the text cursor 3b.

Moreover, in this embodiment, the text cursor 3b and the induction mark 3c are blinked on and off at 0.5-second intervals. However, the blinking intervals may also be intervals at which a user's gaze can be induced onto the first operating means 1.

Still further, in this embodiment, the data input apparatus 10 is described as an apparatus which inputs and manages body information, such as body temperature, body weight, blood pressure and a blood-sugar value. However, the present invention is not limited especially to this. It can be applied to a special-purpose information processing apparatus, a general-purpose computer, a portable data input apparatus, or the like.

### (Second Embodiment)

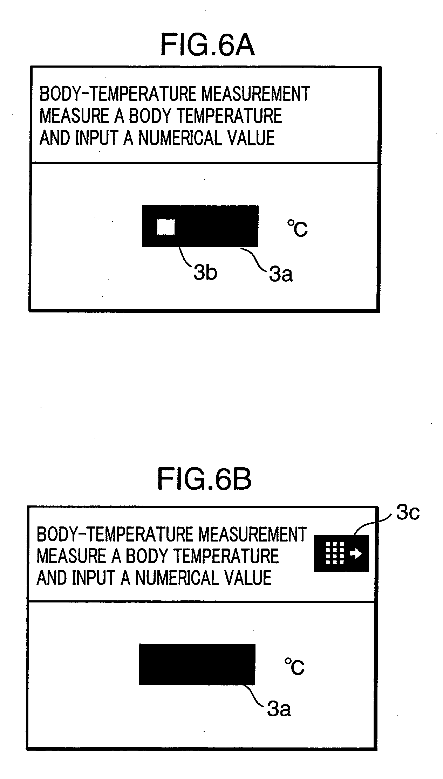

Next, a second embodiment of the present invention will be described. The text cursor 3b and the induction mark 3c may also be displayed as shown in Fig. 6A and Fig. 6B.

Fig. 6A and Fig. 6B are each a representation, showing a screen-image example which is displayed in the displaying means 3. No description is given to the configuration of a data input apparatus, because it is the same as that according to the first embodiment.

In the data input apparatus 10 according to the first embodiment, the data display area 3a is displayed in white, and an inputted numerical value is displayed using black characters against a white background. However, in the data input apparatus 10 according to the second embodiment, the data display area 3a is reversed from white to black, and vice versa. Hence, an inputted numerical value is displayed with white characters on a black background. In the text cursor 3b, also, a white cursor is blinked on and off on a black background.

Similarly to the first embodiment, the induction mark 3c which is displayed by the inducing means 5 includes spots which indicate the twelve buttons on the numerical keyboard 1a, and a rightward arrow which indicates the direction in which the numerical keyboard 1a is located. As shown in Fig. 6B, the induction mark 3c has a white part and a black part whose area is larger than the white part, so that it looks blackish as a whole. In the part where the induction mark 3c is displayed, its background is white.

Herein, the data input apparatus 10 according to the second embodiment is different from that according to the first embodiment, only in the following respect. The on-and-off decision on the cursor-state flag at the step S25 in the timer interruption processing shown in Fig. 3 according to the first embodiment, is designed to be reversed. The processing other than this is the same.

In the data input apparatus 10 according to the second embodiment, when the direct input of numerical data is started using the first operating means 1, as shown in Fig. 6A, the inducing means 5 turns off the display of the induction mark 3c when the text cursor 3b is displayed. In contrast, as shown in Fig. 6B, it displays the induction mark 3c when the display of the text cursor 3b is turned off. In other words, the screen image shown in Fig. 6A is displayed in the timing when the image shown in Fig. 5A according to the first embodiment is displayed. In the timing when the screen image shown in Fig. 5B according to the first embodiment is displayed, the image shown in Fig. 6B is displayed.

In the second embodiment, on the screen of the displaying means 3, the induction mark 3c is not displayed synchronously when the text cursor 3b is displayed, and the induction mark 3c is displayed synchronously when the text cursor 3b is not displayed. As a result, visually, the display of the black induction mark 3c is turned off and a white background appears synchronously when the white text cursor 3b is displayed in the data display area 3a. On the other hand, the display of the blackish induction mark 3c is displayed synchronously when the text cursor 3b disappears and a black background appears in the data display area 3a. Therefore, the data display area 3a in which an inputted numerical value is displayed can be related to the induction mark 3c.

In addition, the induction mark 3c includes a rightward arrow, and thus, the user can recognize that the first operating means 1 sits in the right direction from the displaying means 3. In addition, it also includes a figure which expresses the shape of the button group of the numerical keyboard 1a in the first operating means 1. Therefore, the user can become intuitively aware where the first operating means is located in the data input apparatus. This can suitably induce a user's gaze onto the first operating means 1.

### (Third Embodiment)

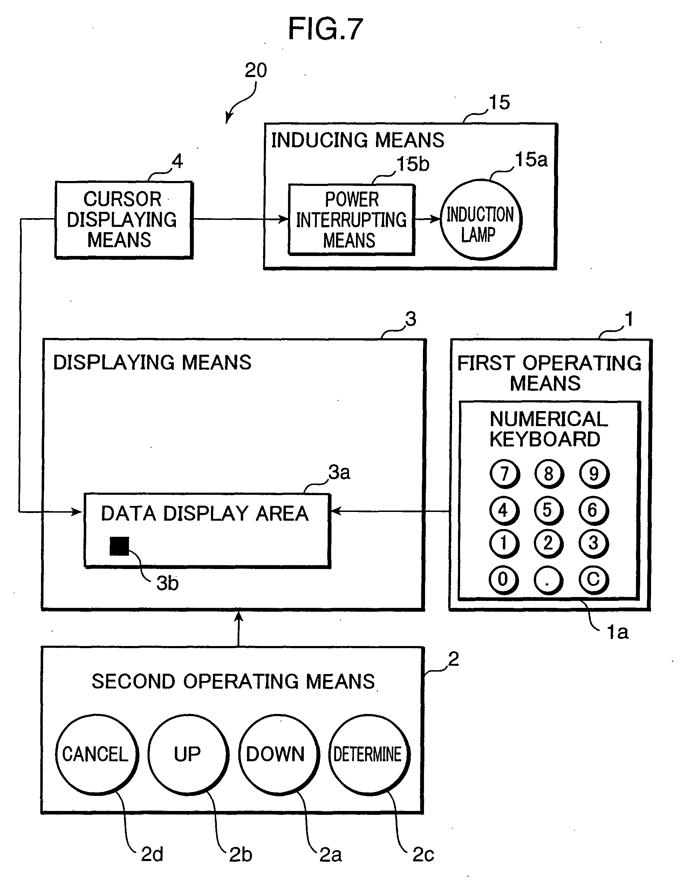

Next, a third embodiment of the present invention will be described. Fig. 7 is a block diagram, showing the configuration of a data input apparatus according to the third embodiment of the present invention. In Fig. 7, an inducing means 15 for inducing a user's gaze onto the first operating means 1 includes an induction lamp 15a which blinks on and off as an induction mark for leading a user's eyes onto the first operating means 1, and a power interrupting means 15b which blinks on and off the induction lamp 15a by allowing electric power that is supplied to the induction lamp 15a to be intermittent. The induction lamp 15a is realized, for example, using a light-emitting diode, and is disposed right on the side of the numerical keyboard 1a. A data input apparatus 20 according to the third embodiment is different from that according to the first embodiment, only in two respects where the inducing means 5 is replaced with the inducing means 15, and the induction mark 3c is not displayed in the displaying means 3. Thus, otherwise, the same component elements as those according to the first embodiment are given the reference numerals and characters identical with those according to the first embodiment. Hence, their detailed description is omitted.

Next, an operation will be described of the data input apparatus 20 according to the third embodiment. In the case where something except inputting a numerical value directly is executed using the second operating means 2, exactly the same operation is executed as that according to the first embodiment.

When the direct input of a body temperature is started, the displaying means 3 first displays the image of Fig. 5B. On the screen image of Fig. 5B, the cursor displaying means 4 periodically blinks the text cursor 3b on and off. For example, its light is kept turned on for 0.5 seconds and off for 0.5 seconds so that it can be blinked at intervals of one second. In other words, in the displaying means 3, the screen image which is obtained by removing the induction mark 3c from Fig. 5A and the screen image of Fig. 5B are displayed so that they are alternately switched at 0.5-second intervals.

Synchronously when the cursor displaying means 4 blinks the text cursor 3b on and off, the power interrupting means 15b supplies electric power to the induction lamp 15a when the text cursor 3b is displayed. When the text cursor 3b is not displayed, it stops supplying electric power to the induction lamp 15a. The light of the induction lamp 15a is turned on when electric power is supplied from the power interrupting means 15b. When the power supply is stopped, as a matter of course, it is turned off.

In short, the data input processing according to the third embodiment is different only from the processing of the steps S5 to S11 in the data input processing shown in Fig. 2 according to the first embodiment. The remaining processing is the same. In the third embodiment, at the step S5 shown in Fig. 2, the cursor displaying means 4 turns off a cursor-state flag, and the inducing means 15 turns on an induction-lamp blinking flag. Herein, when the cursor-state flag is turned on, the light of the text cursor 3b is turned on. On the other hand, when it is turned off, the light of the text cursor 3b is turned off. Besides, the induction-lamp blinking flag is a flag for blinking the induction lamp 15a on and off when it is turned on and turning on the induction lamp 15a when it is turned off. In a step S6, the displaying means 3 permits a timer interruption processing.

Herein, the timer interruption processing is different in the respect where the induction-mark blinking flag is replaced by the induction-lamp blinking flag. The power interrupting means 15b stops supplying electric power, so that the induction lamp 15a is turned off. In contrast, the power interrupting means 15b supplies electric power, so that the induction lamp 15a is turned on. Then, in the step S7, the first operating means 1 accepts the input of numerical data by the user. When any of the buttons of the numerical keyboard 1a is pressed, the inducing means 15 turns off the induction-lamp blinking flag. In a step S8, the second operating means 2 decides whether or not the "Determine" button 2c has been pressed. If the "Determine" button 2c has been pressed, the processing goes to a step S9. Unless the "Determine" button 2c has been pressed, the processing returns to the step S7. Then, the input of a numerical value by the user is again accepted. If the "Determine" button 2c has been pressed down, in the step S9, the displaying means 3 prohibits the timer interruption processing. In a step S10, the cursor displaying means 4 turns off the light of the text cursor 3b. Then, the power interrupting means 15b stops electric power which is supplied to the induction lamp 15a, so that the induction lamp 15a is turned off.

Therefore, when the text cursor 3b is displayed on the screen of the displaying means 3, the induction lamp 15a is turned on. On the other hand, when the text cursor 3b is not displayed, the induction lamp 15a is also turned off.

According to the third embodiment, when the direct input of numerical data should be started using the first operating means 1, the inducing means 15 blinks the induction lamp 15a which is disposed right on the side of the numerical keyboard 1a. Thereby, a user' s attention can be drawn. Therefore, without providing any area in which the induction mark 3c is displayed on the screen of the displaying means 3, a user's gaze can be appropriately induced onto the first operating means 1. Besides, even in an environment where it is not light so much around there, a user's gaze can be suitably induced onto the first operating means.

Furthermore, the power interrupting means 15b allows electric power which is supplied to the induction lamp 15a to be intermittent, so that the induction lamp 15a can be blinked on and off. Therefore, a power consumption becomes less than that in the case where the induction lamp 15a is kept lighted in the prior arts. Especially, in a portable data input apparatus such as a mobile phone which works on a battery, its operable time can be extended without charging or replacing the battery.

Moreover, in this embodiment, the induction lamp 15a is simply disposed right sideward from the numerical keyboard 1a. However, the induction lamp 15a may also be disposed behind the numerical keyboard 1a by molding the key top of the numerical keyboard 1a out of a material which is easily transparent to light and by turning on the light of the key top. Besides, a plurality of induction lamps 15a may also illuminate the operation surface of the first operating means 1 by providing such a induction lamp 15a in each key of the numerical keyboard 1a. According to this configuration, the keys which a user should operate are directly blinked on and off, thus making it possible to directly lead a user's gaze onto the first operating means 1.

Furthermore, the second operating means 2 may also include other kinds of buttons for moving an item to be chosen. Specifically, a button for moving it rightward or leftward can be added to the "Down" button 2a and the "Up" button 2b. Or, the "Down" button 2a and the "Up" button 2b may be replaced with a button for moving it right or left. Besides, the "Cancel" button 2d may also be excluded, and then, the selection item of each screen image can be provided with the item of "Cancel".

Moreover, in the numerical keyboard 1a, the "0" button, the decimal-point button "." and the clearing button "C" may also be replaced with a "*" button, a "0" button and a "#" button. Thereby, it can be configured in the same way as that of a telephone. Or, another configuration can also be adopted. In addition, of course, it is also possible to combine such buttons, so that not only a numerical value but also any character can be inputted.

The present invention has so far been described in detail, but the above description is illustrations in all aspects. The present invention is not limited to those. Numerous variations which are not illustrated can be expected without departing from the scope of the present invention.

### Industrial Applicability

The data input apparatus, the data input method, the data input program and the computer-readable recording medium in which a data input program is recorded according to the present invention, which are capable of desirably inducing a user's gaze onto a keyboard or numeral buttons when data is directly inputted from the keyboard or the numeral buttons. They can be used for a special-purpose information processing apparatus, a general-purpose computer, a portable data input apparatus, or the like, which inputs numerical data or character data.

## Claims

1. A data input apparatus, **characterized by** including:
a first operating means for directly inputting at least either of numerical data and character data;
a second operating means for executing an operation except a direct input of numerical data and character data; and
an inducing means for inducing a user's gaze onto the first operating means by having a blinking operation accompanied when a data input is started by the first operating means.

2. The data input apparatus according to claim 1,
**characterized in that** the inducing means blinks on and off an induction mark for inducing a user's gaze onto the first operating means when a data input is started by the first operating means.

3. The data input apparatus according to claim 2,
**characterized in that**:
the data input apparatus further includes a displaying means for displaying data which is inputted by the first operating means, and a cursor displaying means for displaying a blinking cursor in the displaying means; and
the inducing means synchronizes a blink of the blinking cursor and a blink of the induction mark.

4. The data input apparatus according to claim 3,
**characterized in that** the induction mark is disposed so that the distance between the induction mark which is blinked on and off by the inducing means and the first operating means is shorter than the distance between the blinking cursor which is displayed by the cursor displaying means and the first operating means.

5. The data input apparatus according to claim 3,
**characterized in that** the inducing means blinks on and off, in the displaying means, an induction mark for inducing a user's gaze onto the first operating means.

6. The data input apparatus according to claim 5,
**characterized in that** the induction mark which is blinked on and off by the inducing means is disposed closer to the first operating means than the middle of the displaying means.

7. The data input apparatus according to claim 5,
**characterized in that** the induction mark includes a figure which represents the shape of the first operating means.

8. The data input apparatus according to claim 5,
**characterized in that** the induction mark includes a figure which represents the direction where the first operating means is located.

9. The data input apparatus according to claim 2,
**characterized in that** the inducing means stops blinking on and off an induction mark for inducing a user's gaze onto the first operating means when an operation of the first operating means is started.

10. The data input apparatus according to claim 2,
**characterized in that** the inducing means stops blinking on and off the induction mark when at least either of numerical data and character data is displayed by the displaying means.

11. The data input apparatus according to claim 9 or 10,
**characterized in that** the inducing means turns on the light of the induction mark after stopping blinking on and off the induction mark.

12. The data input apparatus according to claim 2,
**characterized in that** the inducing means turns off the light of the induction mark for inducing a user's gaze onto the first operating means when an operation of the first operating means is completed.

13. The data input apparatus according to claim 3,
**characterized in that** the inducingmeans displays the induction mark synchronously when the blinking cursor is displayed and does not display the induction mark synchronously when the blinking cursor is not displayed.

14. The data input apparatus according to claim 3,
**characterized in that** the inducing means does not display the induction mark synchronously when the blinking cursor is displayed and displays the induction mark synchronously when the blinking cursor is not displayed.

15. The data input apparatus according to claim 2,
**characterized in that** the inducing means includes an induction lamp near the first operating means and blinks on and off the induction lamp as an induction mark for inducing a user's gaze onto the first operating means.

16. The data input apparatus according to claim 15,
**characterized in that** the induction lamp illuminates the operation surface of the first operating means when the induction lamp is lit.

17. The data input apparatus according to claim 15,
**characterized in that** the inducing means blinks on and off the induction lamp by allowing electric power which is supplied to the induction lamp to be intermittent.

18. A data input program, **characterized by** allowing a computer to function as:
a first operating means for directly inputting at least either of numerical data and character data;
a second operating means for executing an operation except a direct input of numerical data and character data; and
an inducing means for inducing a user's gaze onto the first operating means by having a blinking operation accompanied when a data input is started by the first operating means.

19. A computer-readable recording medium in which a data input program is recorded, **characterized in that** the data input program allows a computer to function as:
a first operating means for directly inputting at least either of numerical data and character data;
a second operating means for executing an operation except a direct input of numerical data and character data; and
an inducing means for inducing a user's gaze onto the first operating means by having a blinking operation accompanied when a data input is started by the first operating means.

20. A data input method, **characterized by** including:
an inducing step of an inducing means inducing a user's gaze onto a first operating means for directly inputting at least either of numerical data and character data by having a blinking operation accompanied when a data input is started by the first operating means; and
a first operating step of the first operating means directly inputting at least either of numerical data and character data.

## Amended claims

### Amended claims under Art. 19.1 PCT

**1.** (Amended) A data input apparatus, **characterized by** including:
a first operating means for directly inputting at least either of numerical data and character data;
a second operating means for executing an operation except a direct input of numerical data and character data;
an inducing means for blinking on and off an induction mark which is used to induce a user's gaze onto the first operating means when a data input is started by the first operating means;
a displaying means for displaying data which is inputted by the first operating means; and
a cursor displaying means for displaying a blinking cursor in the displaying means,
the inducing means synchronizing a blink of the blinking cursor and a blink of the induction mark.

**2.** (cancel)

**3.** (cancel)

**4.** (Amended) The data input apparatus according to claim 1, **characterized in that** the induction mark is disposed so that the distance between the induction mark which is blinked on and off by the inducing means and the first operating means is shorter than the distance between the blinking cursor which is displayed by the cursor displaying means and the first operating means.

**5.** (Amended) The data input apparatus according to claim 1, **characterized in that** the inducing means blinks on and off, in the displaying means, an induction mark for inducing a user's gaze onto the first operating means.

**6.** The data input apparatus according to claim 5,
**characterized in that** the induction mark which is blinked on and off by the inducing means is disposed closer to the first operating means than the middle of the displaying means.

**7.** The data input apparatus according to claim 5,
**characterized in that** the induction mark includes a figure which represents the shape of the first operating means.

**8.** The data input apparatus according to claim 5,
**characterized in that** the induction mark includes a figure which represents the direction where the first operating means is located.

**9.** (Amended) The data input apparatus according to claim 1, **characterized in that** the inducing means stops blinking on and off an induction mark for inducing a user's gaze onto the first operating means when an operation of the first operating means is started.

**10.** (Amended) The data input apparatus according to claim 1, **characterized in that** the inducing means stops blinking on and off the induction mark when at least either of numerical data and character data is displayed by the displaying means.

**11.** The data input apparatus according to claim 9 or 10, **characterized in that** the inducing means turns on the light of the induction mark after stopping blinking on and off the induction mark.

**12.** (Amended) The data input apparatus according to claim 1, **characterized in that** the inducing means turns off the light of the induction mark for inducing a user's gaze onto the first operating means when an operation of the first operating means is completed.

**13.** (Amended) The data input apparatus according to claim 1, **characterized in that** the inducing means displays the induction mark synchronously when the blinking cursor is displayed and does not display the induction mark synchronously when the blinking cursor is not displayed.

**14.** (Amended) The data input apparatus according to claim 1, **characterized in that** the inducing means does not display the induction mark synchronously when the blinking cursor is displayed and displays the induction mark synchronously when the blinking cursor is not displayed.

**15.** (Amended) The data input apparatus according to claim 1, **characterized in that** the inducing means includes an induction lamp near the first operating means and blinks on and off the induction lamp as an induction mark for inducing a user's gaze onto the first operating means.

**16.** The data input apparatus according to claim 15,
**characterized in that** the induction lamp illuminates the operation surface of the first operating means when the induction lamp is lit.

**17.** The data input apparatus according to claim 15,
**characterized in that** the inducing means blinks on and off the induction lamp by allowing electric power which is supplied to the induction lamp to be intermittent.

**18.** (Amended) A data input program, **characterized by** allowing a computer to function as:
a first operating means for directly inputting at least either of numerical data and character data;
a second operating means for executing an operation except a direct input of numerical data and character data;
an inducing means for blinking on and off an induction mark which is used to induce a user's gaze onto the first operating means when a data input is started by the first operating means;
a displaying means for displaying data which is inputted by the first operating means; and
a cursor displaying means for displaying a blinking cursor in the displaying means,
the inducing means synchronizing a blink of the blinking cursor and a blink of the induction mark.

**19.** (Amended) A computer-readable recording medium in which a data input program is recorded, **characterized in that** the data input program allows a computer to function as:
a first operating means for directly inputting at least either of numerical data and character data;
a second operating means for executing an operation except a direct input of numerical data and character data;
an inducing means for blinking on and off an induction mark which is used to induce a user's gaze onto the first operating means when a data input is started by the first operating means;
a displaying means for displaying data which is inputted by the first operating means; and
a cursor displaying means for displaying a blinking cursor in the displaying means,
the inducing means synchronizing a blink of the blinking cursor and a blink of the induction mark.

**20.** (Amended) A data input method, **characterized by** including:
an inducing step of an inducing means blinking on and off an induction mark which is used to induce a user's gaze onto a first operating means for directly inputting at least either of numerical data and character data when a data input is started by the first operating means;
a first operating step of the first operating means directly inputting at least either of numerical data and character data;
a displaying step of a displaying means displaying data which is inputted in the first operating step;
a cursor displaying step of a cursor displaying means displaying a blinking cursor on a display screen which is displayed in the displaying step; and
a blink synchronizing step of the inducing means synchronizing a blink of the blinking cursor and a blink of the induction mark.
